# DEMANDE DE BREVET EUROPEEN

(11) **EP 1 598 998 A1**
(43) Date de publication de la demande: **23.11.2005**
(21) Numéro de dépôt: 05290887.8
(22) Date de dépôt: 21.04.2005
(51) Int. Cl.: H04L 12/56

(54) **Procédé et dispositif de prédiction d'une interruption de lien dans un réseau de communications ad hoc à protocole de routage de type manet**

(30) Priorité: 18.05.2004 FR 0450980
(71) Demandeur: ALCATEL, 75008 Paris (FR)
(72) Inventeur: Preguica, Christophe, 91300 Massy (FR)
(74) Mandataire: Chaffraix, Sylvain

(57) **Abrégé**

Un réseau de communications ad hoc à protocole de routage de type MANET est agencé pour mettre en oeuvre un procédé dédié à la prédiction d'interruption de lien entre des routeurs (R1, R2) d'un réseau de communications ad hoc à protocole de routage de type MANET. Ce procédé consiste à mesurer au niveau de chaque routeur (R1-R11) du réseau l'intensité des signaux qui proviennent de l'un au moins de ses routeurs voisins, puis à comparer chaque intensité mesurée à un seuil choisi. Ainsi, lorsqu'un routeur (R1) détecte que l'intensité mesurée des signaux provenant d'un lien avec un routeur voisin (R2) est inférieure au seuil, il considère que ce lien est interrompu et transmet à l'un au moins de ses routeurs voisins un message destiné à pallier cette interruption de lien.

## Description

L'invention concerne le domaine des réseaux de communications ad hoc à protocole de routage de type MANET (pour « Mobile Ad hoc NETwork »).

Comme le sait l'homme de l'art, le routage au sein d'un réseau ad hoc est destiné à permettre un acheminement optimal de données entre au moins un routeur source et un ou plusieurs routeurs destinataires (ou récepteurs). Le routage peut être de type réactif ou proactif.

Un routage est dit « réactif » lorsque chaque routeur doit demander chaque chemin de routage du fait qu'il ne connaît pas la topologie du réseau. Un routage est dit « proactif » lorsque chaque routeur peut calculer chaque chemin de routage grâce à sa connaissance de la topologie du réseau.

Ces réseaux de communication ad-hoc peuvent être de type point à point (ou « unicast ») ou de type point à multipoints (ou « multicast »).

Un protocole de routage proactif multicast peut reposer sur un routage maillé (ou mesh-based ») ou arborescent (ou « tree-based »). Un routage multicast maillé consiste à définir plusieurs chemins entre chaque routeur source d'un réseau et des routeurs récepteurs, tandis qu'un routage multicast arborescent consiste à définir un unique chemin de routage optimal entre un routeur source et des routeurs récepteurs, définissant une arborescence hiérarchique.

Lorsqu'un lien est interrompu entre deux routeurs voisins d'une arborescence hiérarchisée, par exemple du fait que l'un d'entre eux s'est déplacé, une renégociation de l'arborescence doit être engagée au niveau du réseau. Le temps nécessaire à la reconstruction d'une arborescence pouvant être relativement long, des paquets de données peuvent être perdus. Par conséquent, ce type de protocole n'est pas bien adapté à la mobilité des équipements de réseau.

Les protocoles proactifs unicast ont été conçus pour permettre à chaque routeur de communiquer à chacun de ses routeurs voisins des informations de routage lui signalant tous les routeurs voisins auxquels il est lié. Le protocole TBRPF est un tel protocole et est par exemple décrit dans la demande de brevet US 2002/0012320.

Selon les protocoles proactifs, chaque routeur est en mesure de déterminer le chemin optimal pour transmettre des données vers un routeur destinataire. Lorsqu'un lien est interrompu entre deux routeurs voisins, les routeurs voisins de ces deux routeurs doivent attendre qu'ils leurs transmettent leurs informations de routage mises à jour afin de pouvoir tenir compte du lien interrompu dans leurs calculs de chemins de routage. Par conséquent, tant que les routeurs n'ont pas reçus de mise à jour, certains chemins calculés ne sont pas optimisés.

Aucun protocole de routage proactif ou réactif n'étant entièrement satisfaisant dans les réseaux ad hoc, l'invention a donc pour but d'améliorer la situation.

Elle propose à cet effet un procédé, dédié à la prédiction d'interruption de lien entre des routeurs d'un réseau de communications ad hoc à protocole de routage de type MANET, et consistant à mesurer au niveau de chaque routeur du réseau l'intensité des signaux qui proviennent de l'un au moins de ses routeurs voisins, puis à comparer chaque intensité mesurée à un seuil choisi. Ainsi, lorsqu'un routeur détecte que l'intensité mesurée des signaux provenant d'un lien avec un routeur voisin est inférieure au seuil, il considère que ce lien est interrompu et transmet à l'un au moins de ses routeurs voisins un message destiné à pallier cette interruption de lien.

Deux cas peuvent être envisagés selon que le protocole de routage est de type muiticast ou unicast.

En présence d'un protocole de routage multicast, et d'une arborescence hiérarchisée de type « fils/père » établie entre un routeur source et au moins un routeur récepteur, via des routeurs dits intermédiaires, on mesure au niveau de chaque routeur de l'arborescence l'intensité des signaux qui proviennent de son routeur « père », puis on compare cette intensité mesurée à un seuil choisi. Ainsi, lorsqu'un routeur « fils » détecte que l'intensité mesurée des signaux provenant du lien avec son routeur père est inférieure au seuil, il transmet un message, en mode point à point, à un routeur voisin du réseau, différent de son routeur père, ce message comportant une demande de participation (ou « join ») à l'arborescence, désignant le routeur source.

Deux situations peuvent alors survenir :
a) si le routeur père voisin est déjà associé à un autre routeur fils de l'arborescence, on l'associe au routeur fils demandeur afin de le faire participer à l'arborescence, et on incrémente d'une unité la valeur d'une information d'état représentative du nombre de routeurs fils qui lui sont associés, et
b) si le routeur père voisin n'est pas déjà associé à un autre routeur fils de l'arborescence, on l'associe au routeur fils demandeur et on place à la valeur « un » son information d'état, puis on lui fait transmettre en mode point à point, à un autre routeur voisin du réseau, qui constitue alors son père, une demande de participation désignant le routeur source, puis
c) on réitère l'opération a) ou l'opération b) avec le routeur père voisin qui reçoit la demande de participation selon qu'il est ou n'est pas lui-même déjà associé à un autre routeur fils de l'arborescence.

La demande de participation comporte préférentiellement une adresse « unicast » désignant le routeur source et une adresse de groupe « multicast ».

En présence d'un protocole de routage unicast, on mesure au niveau de chaque routeur du réseau l'intensité des signaux qui proviennent de chacun de ses routeurs voisins, puis on compare chaque intensité mesurée à un seuil choisi. Ainsi, lorsqu'un routeur détecte que l'intensité mesurée des signaux provenant d'un lien avec l'un de ses routeurs voisins est inférieure au seuil, il transmet à chacun de ses routeurs voisins un message comportant des informations représentatives de l'interruption du lien, et de préférence désignant le routeur qui ne peut plus être joint du fait de cette interruption de lien.

Dans l'une ou l'autre des deux situations, il est avantageux de compter au niveau de chaque routeur le temps qui s'écoule depuis le début d'une interruption de lien, de manière à ne transmettre un message qu'à condition qu'une première durée choisie se soit écoulée (l'intensité mesurée devant bien entendu toujours rester inférieur au seuil pendant toute cette durée).

L'invention propose également un dispositif dédié à la prédiction d'interruption de lien entre routeurs, pour un routeur d'un réseau de communications ad hoc à protocole de routage de type MANET. Ce dispositif se caractérise par le fait qu'il comprend des moyens de traitement chargés de comparer à un seuil choisi, au niveau du routeur qu'ils équipent, l'intensité mesurée des signaux qui proviennent de l'un au moins de ses routeurs voisins. Ainsi, lorsque les moyens de traitement détectent une intensité mesurée inférieure au seuil sur un lien avec un routeur voisin, ils considèrent ce lien comme interrompu et ordonnent la transmission à l'un au moins des routeurs voisins d'un message destiné à pallier l'interruption de lien.

Le dispositif peut se décliner de façons différentes selon que le protocole de routage est de type multicast ou unicast.

En présence d'un protocole de routage multicast et d'une arborescence hiérarchisée de type « fils/père » établie entre un routeur source et au moins un routeur récepteur du réseau, et à laquelle participe le routeur qu'équipe le dispositif, les moyens de traitement sont chargés de comparer au seuil choisi l'intensité mesurée des signaux qui proviennent du routeur de l'arborescence qui est le père de leur routeur. Ainsi, lorsque les moyens de traitement détectent une intensité mesurée inférieure au seuil sur le lien avec le routeur père, ils ordonnent la transmission du message en mode unicast à un routeur voisin du réseau, différent du routeur père, ce message comportant une demande de participation à l'arborescence (ou « join »), désignant le routeur source.

Cette demande de participation comporte préférentiellement une adresse unicast désignant le routeur source et une adresse de groupe multicast.

En présence d'un protocole de routage unicast, les moyens de traitement sont chargés de comparer au seuil choisi l'intensité mesurée des signaux qui proviennent de chacun des routeurs voisins du routeur qu'ils équipent. Ainsi, lorsque les moyens de traitement détectent qu'une intensité mesurée est inférieure au seuil sur le lien avec l'un des routeurs voisins, ils ordonnent la transmission à chacun des routeurs voisins, d'un message comportant des informations représentatives de l'interruption du lien, et de préférence désignant le routeur qui ne peut plus être joint du fait de cette interruption de lien.

Par ailleurs, le dispositif peut également comprendre des moyens de comptage chargés, en cas de détection d'une intensité mesurée inférieure au seuil, de déclencher un comptage temporel et de délivrer un signal choisi lorsque le temps écoulé depuis le début de la détection est égal à une durée choisie (l'intensité mesurée devant bien entendu toujours rester inférieure au seuil pendant toute cette durée). Dans ce cas, les moyens de traitement sont agencés pour ne transmettre leur message qu'à réception du signal choisi.

D'autres caractéristiques et avantages de l'invention apparaîtront à l'examen de la description détaillée ci-après, et des dessins annexés, sur lesquels :
- la figure 1 illustre de façon schématique un exemple de groupe de routeurs d'un réseau ad hoc à protocole de routage proactif multicast de type MANET, au sein duquel a été établie une arborescence hiérarchisée entre un routeur récepteur et un routeur source,
- les figures 2A à 2C illustrent de façon schématique les trois phases successives permettant la prédiction d'une interruption de lien au sein de l'exemple d'arborescence hiérarchisée de la figure 1, puis l'établissement d'une arborescence hiérarchisée partiellement nouvelle,
- la figure 3 illustre de façon schématique un exemple de réalisation de dispositif de prédiction permettant de mettre en oeuvre le procédé de prédiction selon l'invention dans un routeur notamment d'un réseau ad hoc à protocole de routage proactif multicast de type MANET, et
- la figure 4 illustre de façon schématique l'opération de prédiction d'une interruption de lien au sein d'un ensemble de routeurs d'un réseau ad hoc à protocole de routage proactif unicast de type MANET, puis les opérations de signalisation consécutives.

Les dessins annexés pourront non seulement servir à compléter l'invention, mais aussi contribuer à sa définition, le cas échéant.

L'invention a pour objet de permettre la prédiction d'interruption de lien entre routeurs et le déclenchement d'actions appropriées consécutives, au sein d'un réseau de communications ad hoc à protocole de routage proactif ou réactif, multicast ou unicast, de type MANET.

Un réseau ad hoc peut être assimilé, de façon très schématique mais suffisante à la compréhension de l'invention, à un ensemble, ou un ou plusieurs groupes, de routeurs pouvant être fixes ou mobiles.

Dans sa plus grande généralité, l'invention propose de mesurer au niveau de chaque routeur d'un réseau ad hoc l'intensité des signaux qui proviennent de l'un au moins de ses routeurs voisins, puis de comparer chaque intensité mesurée à un seuil choisi. Ainsi, lorsque l'un des routeurs du réseau détecte que l'intensité mesurée des signaux qui proviennent d'un lien avec l'un de ses routeurs voisins est inférieure au seuil choisi, il considère que ce lien est interrompu et transmet à l'un au moins de ses routeurs voisins un message destiné à pallier cette interruption de lien.

L'expression « pallier cette interruption » désigne ici le déclenchement d'actions appropriées consécutivement à la prédiction d'une interruption de lien. Comme on le verra plus loin, ce déclenchement peut se présenter de façons différentes selon que le routage est de type multicast ou unicast.

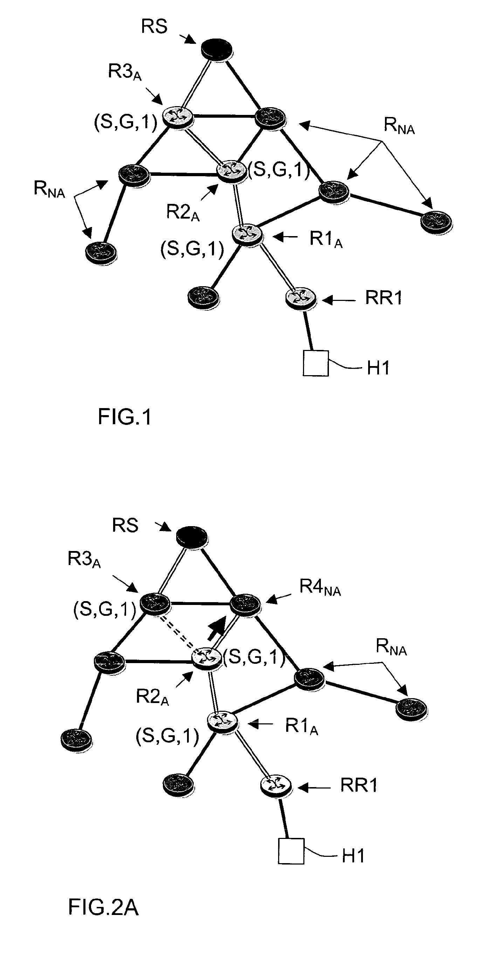

On se réfère tout d'abord aux figures 1 à 3 pour décrire une première application de l'invention aux réseaux de communications ad hoc à protocole de routage proactif multicast de type MANET.

Dans cette première application, on considère, à titre d'exemple illustratif, que le réseau ad hoc utilise un protocole de routage proactif multicast, tel que TBRPF (Topology-Based and dissemination with Reverse Path Forwarding) ou OLSR (Optimized Link State Routing). Mais, l'invention n'est pas limitée à ces exemples de protocole de routage proactif multicast. Elle concerne en effet également les protocoles de routage réactifs.

Comme cela est schématiquement illustré sur la figure 1, un réseau ad hoc multicast peut être assimilé à au moins un groupe G de routeurs comportant un routeur source RS et des routeurs RR1, R_{A} et R_{NA} qui, tant qu'une arborescence hiérarchisée n'a pas été instaurée, ne sont pas liés deux à deux selon une hiérarchie de type « père/fils ». Les liens potentiels entre routeurs n'appartenant pas à une arborescence hiérarchisée sont matérialisés sur les figures par des traits noirs simples.

La référence RR1 désigne un routeur, appelé routeur récepteur, qui est momentanément connecté à un équipement de réseau H, de type « host », appartenant par exemple à un client abonné au réseau ad hoc.

Pour qu'un host H puisse échanger des données avec le routeur source RS, du groupe G auquel il appartient, un chemin optimal de routage doit être défini entre ledit routeur source RS et le routeur récepteur RR1 auquel il est connecté.

Dans un réseau à protocole de routage proactif multicast, chaque routeur connaît la topologie du réseau, si bien qu'il est capable de déterminer le chemin de routage le plus court (ou chemin optimal) pour transmettre des données au routeur source RS. Par conséquent, chaque routeur est capable de déterminer le routeur voisin qui est placé au-dessus de lui dans la hiérarchie et auquel il devra transmettre des données reçues en vue de leur acheminement jusqu'au routeur source RS. Le routeur qui est le moins bien placé des deux hiérarchiquement est appelé routeur fils, tandis que son routeur voisin est appelé routeur père (voisin).

Un chemin optimal entre un routeur récepteur RR1 et un routeur source RS suit une arborescence hiérarchisée. Un exemple d'arborescence hiérarchisée est illustré sur la figure 1. Plus précisément dans cet exemple l'arborescence hiérarchisée part du routeur récepteur RR1, passe par un premier routeur « intermédiaire » R1_{A}, puis par un deuxième routeur intermédiaire R2_{A}, puis par un troisième routeur intermédiaire R3_{A}, et se termine au niveau du routeur source RS.

Les références R_{NA} désignent des routeurs qui ne participent pas à l'arborescence hiérarchisée, tandis que les références Ri_{A} (ici i = 1 à 3) désignent des routeurs qui participent à l'arborescence hiérarchisée.

Sur la figure 1 les liens établis entre deux routeurs de l'arborescence hiérarchisée sont matérialisés par un double trait.

Dans certaines situations, par exemple lorsque l'un des routeurs qui participent à l'arborescence hiérarchisée se déplace, les signaux qu'il transmet sur un lien de l'arborescence hiérarchisée parviennent avec une intensité de plus en plus faible au niveau du routeur voisin qui est situé à l'autre extrémité de ce lien. Lorsque l'intensité des signaux reçus par l'un des deux routeurs concernés devient inférieure à un premier seuil S1, le lien est interrompu. Dans un réseau classique, on doit alors effectuer une renégociation de l'arborescence hiérarchisée complète.

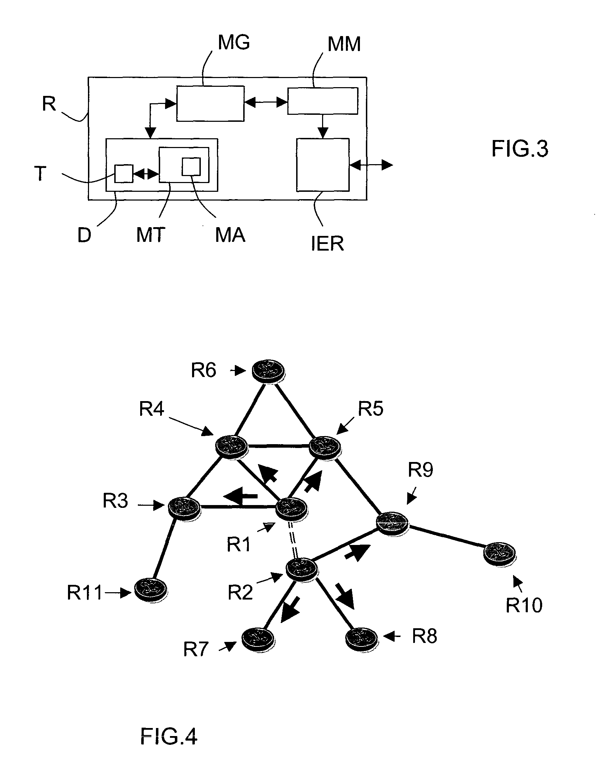

Pour éviter qu'une telle situation ne survienne, on équipe chaque routeur du réseau ad hoc d'un dispositif de prédiction D du type de celui illustré sur la figure 3.

Un tel dispositif de prédiction D comprend un module de traitement MT chargé de comparer à un second seuil choisi S2 (supérieur au premier seuil S1) l'intensité mesurée des signaux qui proviennent du routeur de l'arborescence hiérarchisée, par exemple R3_{A}, qui est le père du routeur, par exemple R2_{A}, dans lequel il est installé.

Les mesures d'intensité peuvent être fournies par un module de mesure d'intensité MM du routeur R, indépendant du dispositif D et couplé à son interface d'émission/réception IER, comme illustré sur la figure 3. Dans ce cas, les mesures d'intensité peuvent être par exemple transmises au dispositif D par un module de gestion MG du routeur R. Mais, en variante, le dispositif D peut comprendre un module de mesure d'intensité couplé à l'interface d'émission/réception IER du routeur R et à son propre module de traitement MT.

Lorsque le module de traitement MT détecte une intensité inférieure au second seuil S2 et supérieure au premier seuil S1 sur le lien avec le routeur père R3_{A}, il considère le lien comme interrompu et ordonne la transmission d'un message en mode unicast à un routeur voisin du réseau, différent du routeur père R3_{A}, par exemple R4_{NA} (comme illustré sur la figure 2A). Une telle transmission est matérialisée sur la figure 2A par une flèche épaisse.

Il est avantageux que le dispositif de prédiction D comprenne également un module de comptage T couplé à son module de traitement MT et chargé, chaque fois que ce dernier détecte une intensité mesurée inférieure au second seuil S2 et supérieure au premier seuil S1, de déclencher un comptage temporel. Ce module de comptage T, qui est par exemple une temporisation (ou « timer »), délivre un signal choisi à destination du module de traitement MT chaque fois que le temps qui s'est écoulé depuis le début de la détection devient égal à une durée choisie, par exemple égale à 500 ms.

Le module de traitement MT n'est alors autorisé à ordonner la transmission au nouveau routeur père de son message, contenant la demande de participation à l'arborescence, qu'à condition qu'il ait reçu un signal choisi du module de comptage T.

Bien entendu, si le module de traitement MT s'aperçoit, lors de ses comparaisons (qui ne s'interrompent pas), que l'intensité du signal sur le lien en cours d'interruption, redevient supérieure au second seuil S2, alors cela interrompt le comptage temporel en cours au niveau du module de comptage T. La temporisation repasse alors à la valeur zéro (0). On peut par ailleurs envisager que la temporisation ne repasse pas à la valeur 0 et ne soit arrêtée qu'à condition que le signal repasse au dessus du second seuil S2 pendant un délai supérieur à une seconde durée T2 définie par une autre temporisation. Cela permet d'être moins sensible à l'environnement radioélectrique et aux diverses réflexions des ondes.

Le nouveau routeur père R4_{NA} est déterminé parmi les routeurs du groupe G par le protocole de routage du routeur fils R2_{A}, compte tenu de l'interruption du lien avec l'ancien routeur père R3_{A}. Ce protocole de routage est par exemple implanté dans le module de gestion MG du routeur R. Il est important de noter que le dispositif D peut constituer une partie complémentaire du protocole de routage. Il peut par conséquent être implanté dans le module de gestion MG du routeur R ou bien dans un module de routage couplé au module de gestion MG.

Le message transmis par le routeur fils R2_{A} au nouveau routeur père R4_{NA} comporte (ou constitue) une demande de participation à l'arborescence (appelée « join » en anglais), désignant le routeur source RS.

Cette demande de participation comporte préférentiellement l'adresse unicast désignant le routeur source RS et l'adresse multicast du groupe G.

Par ailleurs, le traitement de chaque demande de participation reçue peut être assuré par un module auxiliaire MA, par exemple implanté dans le module de traitement MT du dispositif de prédiction D, comme illustré sur la figure 3. Mais, en variante, il pourrait être assuré par un module auxiliaire MA du dispositif de prédiction D indépendant de son module de traitement MT.

La transmission de cette demande de participation est destinée à initier la reconstitution d'une nouvelle partie supérieure de l'arborescence hiérarchisée, l'ancienne n'étant plus valide du fait de l'interruption d'un lien, ici entre les routeurs R2_{A} et R3_{A}.

Lorsque le nouveau routeur père R4_{NA} reçoit la demande de participation transmise par le routeur fils R2_{A}, deux cas peuvent survenir.

Si le routeur père est déjà associé à un autre routeur fils du groupe G, cela veut dire qu'une arborescence existe déjà et qu'il en fait partie (on le note alors R_{A}). Par exemple, chaque routeur R_{A} appartenant à une arborescence du groupe G est associé à un état défini par un triplet comprenant l'adresse unicast S désignant le routeur source RS, l'adresse multicast G du groupe, et une information d'état dont la valeur représente le nombre de routeurs fils qui lui sont associés. Dans ce premier cas, on associe le routeur père (R4_{NA}) au routeur fils demandeur (R2_{A}), afin de le faire participer à l'arborescence préexistante, et on incrémente d'une unité la valeur de l'information d'état de son triplet.

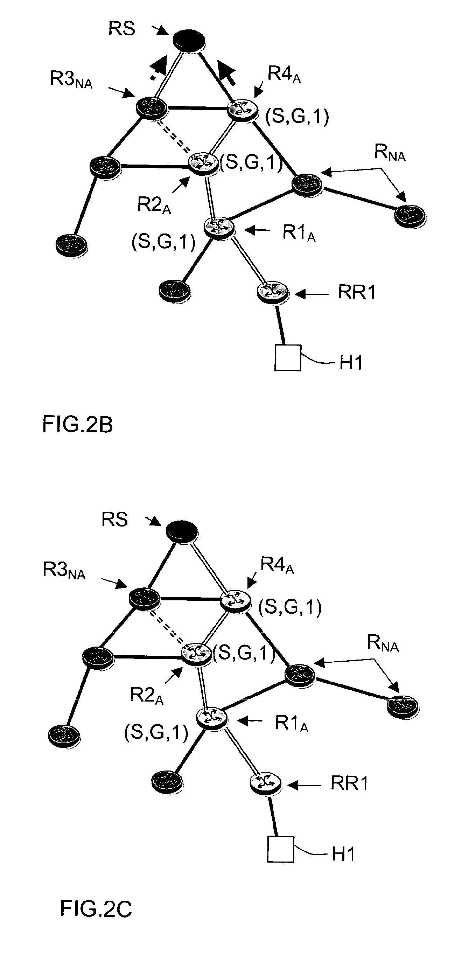

En revanche, si le nouveau routeur père (R4_{NA}) n'est pas encore associé à un routeur fils du groupe G, aucun état ne lui est associé. Cette situation est illustrée sur la figure 2A. Dans ce deuxième cas, on associe le nouveau routeur père R4_{NA} au routeur fils demandeur R2_{A}, ce qui est matérialisé sur la figure 2B par un double trait, et on constitue son triplet avec l'adresse unicast S désignant le routeur source RS et l'adresse multicast G du groupe, contenues dans la demande de participation reçue, ainsi qu'avec la valeur de l'information d'état égale à un (1).

Le routeur père disposant désormais d'un état, il est considéré comme appartenant à l'arborescence en construction et est désormais appelé R4_{A}.

On lui fait alors transmettre en mode unicast à son routeur père voisin, ici le routeur source RS, une demande de participation désignant ledit routeur source RS afin de poursuivre la construction de l'arborescence hiérarchisée en direction du routeur source RS. Cette transmission est matérialisée sur la figure 2B par une flèche épaisse.

Lorsque le routeur source RS reçoit du routeur R4_{A} la demande de participation qui le désigne, on les associe tous les deux, ce qui est matérialisé sur la figure 2C par un double trait. Le routeur père voisin, étant ici le routeur source RS, la partie supérieure de l'arborescence a donc été reconstituée si bien qu'une arborescence hiérarchisée partiellement nouvelle est établie.

Le routeur R3_{A} n'étant plus ici associé à un routeur fils, et étant associé au routeur source RS par un lien constituant l'ancienne partie supérieure, devenue sans objet, il est préférable de supprimer cette ancienne partie supérieure de l'arborescence reformée. Bien entendu, une telle suppression n'a pas lieu d'être lorsque le routeur père est encore associé à au moins un routeur fils malgré l'interruption de lien. Mais, chaque fois qu'un routeur ne possède plus de fils, il doit se retirer de l'arborescence reformée en transmettant une demande de retrait à son routeur père.

Ainsi, dans l'exemple illustré, le routeur R3_{A} transmet au routeur source RS (son père) une demande de retrait de l'arborescence (appelée « prune » en anglais). Cette transmission est matérialisée sur la figure 2B par une flèche en pointillés.

Il est avantageux cependant que le routeur père, dont le lien est interrompu avec son seul routeur fils, attende quelques instants avant de transmettre à son propre routeur père sa demande de retrait de l'arborescence. En effet, l'interruption d'un lien peut être momentanée, et par exemple résulter d'un léger déplacement du routeur fils ou père.

Dans ce cas, le routeur père peut déclencher une temporisation programmée sur une durée choisie, par exemple égale à 500 ms, dès qu'il détecte l'interruption du lien avec son fils. Lorsque le temps écoulé est égal à la durée choisie, le routeur père transmet alors sa demande de retrait.

Le dispositif de prédiction D selon l'invention peut être réalisé sous la forme de circuits électroniques, de modules logiciels (ou informatiques), ou d'une combinaison de circuits et de logiciels.

On se réfère maintenant à la figure 4 pour décrire une seconde application de l'invention aux réseaux de communications ad hoc à protocole de routage proactif unicast de type MANET.

Dans cette seconde application, on considère, à titre d'exemple illustratif, que le réseau ad hoc utilise un protocole de routage proactif unicast, tel que OLSR ou TBRPF. Mais, l'invention n'est pas limitée à ces exemples de protocole de routage proactif unicast. Elle concerne également les protocoles de routage réactifs unicast, tels que AODV (« Ad hoc On-demand Distance Vector ») et DSR (« Dynamic Source Routing »).

Contrairement à un réseau à protocole multicast, décrit ci-avant, un réseau à protocole unicast ne comporte pas d'arborescence. Dans le cadre des protocoles proactifs, les routeurs du réseau ad hoc s'échangent entre voisins des messages comportant des informations de routage signalant notamment les voisins auxquels ils sont « liés », c'est-à-dire avec lesquels ils peuvent échanger des données.

Pour ce type de réseau à protocole unicast, l'invention propose de mesurer au niveau de chacun de ses routeurs l'intensité des signaux qui proviennent de chacun des routeurs voisins auxquels il est lié, puis de comparer chaque intensité mesurée au second seuil S2 (et au premier seuil S1).

Ainsi, lorsque l'un des routeurs détecte que l'intensité mesurée des signaux qui proviennent d'un lien avec l'un de ses routeurs voisins est inférieure au second seuil S2 et supérieure au premier seuil S1, il considère le lien comme interrompu et transmet à chacun de ses routeurs voisins un message comportant des informations représentatives de l'interruption du lien.

Le message transmis peut être un message standard comportant les informations de routage. Mais, il peut également se présenter sous la forme d'un message dédié ne comportant que la désignation du routeur qui ne peut plus être joint du fait d'une interruption de lien.

Grâce à ce message, chaque routeur voisin peut mettre à jour ses informations de routage avant que le lien ne soit interrompu et par conséquent calculer à l'aide de son protocole de routage des chemins optimisés tenant compte de l'interruption dudit lien.

Il est important de noter que les deux routeurs, qui sont liés par un lien sur le point d'être interrompu, peuvent éventuellement détecter chacun de leur côté que l'intensité mesurée des signaux échangés sur ledit lien est inférieure au second seuil S2 et supérieure au premier seuil S1. Ainsi, les deux routeurs vont transmettre à chacun de leurs voisins respectifs des messages signalant l'interruption de leur lien, ce qui permet d'accélérer la propagation de l'information au sein du réseau.

Cette situation est illustrée schématiquement dans l'exemple de la figure 4. Ici, les routeurs R1 et R2 ont chacun de leur côté détecté que l'intensité mesurée des signaux échangés sur leur lien était inférieure au second seuil S2. Ils décident alors, chacun de leur côté, de transmettre à chacun de leurs routeurs voisins respectifs (et accessibles) un message signalant l'interruption de leur lien. Plus précisément, le routeur R1 transmet des messages à ses routeurs voisins R3, R4 et R5, tandis que le routeur R2 transmet des messages à ses routeurs voisins R7, R8 et R9. La transmission de ces messages est matérialisée sur la figure 4 par des flèches épaisses.

Comme dans le cas du réseau à protocole multicast, il est avantageux, ici, de mettre en oeuvre un mécanisme de temporisation afin que les routeurs ne transmettent leur(s) message(s) à leurs routeurs voisins qu'à condition que le temps qui s'est écoulé depuis le début d'une détection soit égal à une durée choisie.

La mise en oeuvre de ce procédé de prédiction peut se faire au sein de chaque routeur R du réseau ad hoc à protocole de routage unicast au moyen d'un dispositif de prédiction D du type de celui décrit ci-avant, en référence à la figure 3, hormis son module auxiliaire MA, et moyennant des adaptations imposées par l'utilisation d'un protocole de routage de type différent, à la portée de l'homme de l'art.

L'invention ne se limite pas aux modes de réalisation de procédé de prédiction, de dispositif de prédiction et de routeur décrits ci-avant, seulement à titre d'exemple, mais elle englobe toutes les variantes que pourra envisager l'homme de l'art dans le cadre des revendications ci-après.

## Revendications

1. Procédé de prédiction d'une interruption de lien entre des routeurs (RR, R) d'un réseau de communications ad hoc à protocole de routage de type MANET, **caractérisé en ce qu'**en présence d'un protocole de routage de type « multicast » et d'une arborescence hiérarchisée de type « fils/père » établie entre un routeur dit source (RS) et au moins un routeur dit récepteur (RR), via des routeurs dits intermédiaires (R_{A}), on mesure au niveau de chaque routeur de ladite arborescence l'intensité des signaux provenant de son routeur dit « père », puis on compare ladite intensité mesurée à un seuil choisi, de sorte qu'en cas de détection au niveau d'un routeur dit « fils » d'une intensité mesurée inférieure audit seuil sur le lien avec son routeur père voisin, ledit routeur fils transmette ledit message, en mode point à point, à un routeur voisin dudit réseau, différent de son routeur père, et **en ce que** ledit message comporte une demande de participation à ladite arborescence désignant ledit routeur source (RS).

2. Procédé selon la revendication 2, **caractérisé en ce que** :
a) si ledit routeur père voisin est déjà associé à un autre routeur fils de ladite arborescence, on associe ledit routeur fils demandeur audit routeur père voisin, de manière à le faire participer à ladite arborescence, et on incrémente d'une unité au niveau dudit routeur père voisin la valeur d'une information d'état représentative du nombre de routeurs fils qui lui sont associés, et
b) si ledit routeur père voisin n'est pas déjà associé à un autre routeur fils de ladite arborescence, on associe ledit routeur fils demandeur audit routeur père voisin et on place à la valeur « un » ladite information d'état dudit routeur père voisin, puis on fait transmettre en mode point à point, par ledit routeur père voisin, à un autre routeur voisin dudit réseau, constituant à son tour un père pour ledit routeur père voisin, une demande de participation désignant ledit routeur source (RS), puis
c) on réitère l'opération a) ou l'opération b) avec ledit routeur père voisin récepteur d'une demande de participation selon qu'il est ou n'est pas lui-même déjà associé à un autre routeur fils de ladite arborescence.

3. Procédé selon l'une des revendications 1 et 2, **caractérisé en ce que** ladite demande de participation comporte une adresse de type « unicast » désignant ledit routeur source (RS) et une adresse de groupe de type « multicast ».

4. Procédé selon l'une des revendications précédentes, **caractérisé en ce qu'**en présence d'un protocole de routage de type « unicast », on mesure au niveau de chaque routeur (Ri) dudit réseau l'intensité des signaux provenant de chacun de ses routeurs voisins, puis on compare chaque intensité mesurée à un seuil choisi, de sorte qu'en cas de détection au niveau d'un routeur d'une intensité mesurée inférieure audit seuil sur un lien avec un routeur voisin, ledit routeur transmette ledit message à chacun de ses routeurs voisins, et **en ce que** ledit message comporte des informations représentatives de l'interruption dudit lien.

5. Procédé selon la revendication 4, **caractérisé en ce que** lesdites informations comprennent la désignation du routeur qui ne peut plus être joint du fait de l'interruption du lien.

6. Procédé selon l'une des revendications précédentes, **caractérisé en ce que** l'on compte au niveau de chaque routeur le temps écoulé depuis le début d'une détection d'intensité inférieure au seuil, de manière à ne transmettre ledit message qu'une fois une durée choisie écoulée.

7. Dispositif (D) de prédiction d'interruption de lien entre routeurs, pour un routeur (RR, R) d'un réseau de communications ad hoc à protocole de routage de type MANET, **caractérisé en ce qu'**il comprend des moyens de traitement (MT) agencés pour comparer à un seuil choisi, au niveau du routeur qu'il équipe, une intensité mesurée de signaux provenant de l'un au moins des routeurs voisins, afin, en cas de détection d'une intensité mesurée inférieure audit seuil sur un lien avec un routeur voisin, de considérer ledit lien comme interrompu et d'ordonner la transmission à l'un au moins desdits routeurs voisins d'un message destiné à pallier ladite interruption de lien ; et **en ce qu'**en présence d'un protocole de routage de type « multicast » et d'une arborescence hiérarchisée de type « fils/père » établie entre un routeur dit source (RS) et au moins un routeur dit récepteur (RR) dudit réseau, et à laquelle participe le routeur (R2_{A}) qu'ils équipent, lesdits moyens de traitement (MT) sont agencés pour comparer audit seuil choisi l'intensité mesurée des signaux provenant d'un routeur (R3_{A}) de ladite arborescence, constituant un « père » pour ledit routeur (R2_{A}), afin, en cas de détection d'une intensité mesurée inférieure audit seuil sur un lien avec ledit routeur père (R3_{A}), d'ordonner la transmission dudit message en mode point à point à un routeur voisin (R4_{A}) dudit réseau, différent dudit routeur père (R3_{A}), et **en ce que** ledit message comporte une demande de participation à ladite arborescence, désignant ledit routeur source (RS).

8. Dispositif selon la revendication 7, **caractérisé en ce que** lesdits moyens de traitement (MT) sont agencés pour constituer des demandes de participation comportant une adresse de type « unicast » désignant ledit routeur source (RS) et une adresse de groupe de type « multicast ».

9. Dispositif selon l'une des revendications 7 ou 8, **caractérisé en ce qu'**en présence d'un protocole de routage de type « unicast », lesdits moyens de traitement (MT) sont agencés pour comparer audit seuil choisi l'intensité mesurée des signaux provenant de chacun des routeurs voisins du routeur (Ri) qu'ils équipent, afin, en cas de détection d'une intensité mesurée inférieure audit seuil sur le lien avec un routeur voisin, d'ordonner la transmission dudit message à chacun desdits routeurs voisins, ledit message comportant alors des informations représentatives de l'interruption dudit lien.

10. Dispositif selon la revendication précédente, **caractérisé en ce que** lesdits moyens de traitement (MT) sont agencés pour générer des informations comprenant la désignation du routeur qui ne peut plus être joint du fait de l'interruption du lien.

11. Dispositif selon l'une des revendications 7 à 10, **caractérisé en ce qu'**il comprend des moyens de comptage (T) couplés auxdits moyens de traitement (MT) et agencés, en cas de détection d'une intensité mesurée inférieure audit seuil, pour déclencher un comptage temporel et délivrer un signal choisi lorsque le temps écoulé depuis le début de ladite détection est égal à une durée choisie, et **en ce que** lesdits moyens de traitement (MT) sont agencés pour transmettre ledit message à réception dudit signal choisi.
